## Europäisches Patentamt

## European Patent Office

## Office européen des brevets

(19)

(11) Veröffentlichungsnummer: **0 458 095 B1**

(12) **EUROPÄISCHE PATENTSCHRIFT**

(45) Veröffentlichungstag der Patentschrift: **30.11.94**

(21) Anmeldenummer: **91107075.3**

(22) Anmeldetag: **02.05.91**

(51) Int. Cl.⁵: **C08G 18/48**, C08G 65/28,
//(C08G18/48,101:00)

(54) **Verfahren zur Herstellung von Urethan- und Urethan und Isocyanuratgruppen enthaltenden Hartschaumstoffen nach dem Polyisocyanat-polyadditionsverfahren.**

(30) Priorität: **10.05.90 DE 4014923**

(43) Veröffentlichungstag der Anmeldung:
**27.11.91 Patentblatt 91/48**

(45) Bekanntmachung des Hinweises auf die
Patenterteilung:
**30.11.94 Patentblatt 94/48**

(84) Benannte Vertragsstaaten:
**AT BE CH DE DK ES FR GB IT LI NL SE**

(56) Entgegenhaltungen:
**FR-A- 1 233 854**

**DATABASE WPIL, Nr. 88-130638, Derwent Publications Ltd, London, GB;**

(73) Patentinhaber: **BASF Aktiengesellschaft
Carl-Bosch-Strasse 38
D-67063 Ludwigshafen (DE)**

(72) Erfinder: **Henn, Rolf, Dr.
Lilienweg 3
W-6834 Ketsch (DE)**
Erfinder: **Hinz, Werner, Dr.
Hanns-Fay-Strasse 1
W-6710 Frankenthal (DE)**
Erfinder: **Schuster, Ludwig, Dr.
Weinheimer Strasse 44
W-6703 Limburgerhof (DE)**
Erfinder: **Vorspohl, Klaus, Dr.
Ruedigerstrasse 1
W-6700 Ludwigshafen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

EP 0 458 095 B1

**Beschreibung**

Gegenstände der Erfindung sind ein Verfahren zur Herstellung von Urethan- oder Urethan- und Isocyanuratgruppen enthaltenden Hartschaumstoffen nach dem Polyisocyanat-polyadditionsverfahren durch Umsetzung von

a) Polyoxypropylen- oder Polyoxyethylen-polyoxypropylen-polyolen mit sekundären Hydroxylgruppen, einer Funktionalität von 3,5 bis 4,3, einer Hydroxylzahl von 350 bis 650 und einer Viskosität von 500 bis 2.500 m•Pa•s bei 23°C, die hergestellt werden durch anionische Polymerisation von 1,2-Propylenoxid oder Ethylenoxid und 1,2-Propylenoxid an eine Startermolekülmischung, die, bezogen auf das Gesamtgewicht, enthält

a1) 40 bis 80 Gew.-% Hexantetrole,
a2) 1 bis 30 Gew.-% Hexantriole,
a3) 0 bis 35 Gew.-% Glycerin und
a4) 0 bis 15 Gew.-% Sorbit oder Mannit oder Mischungen davon

und

b) gegebenenfalls niedermolekularen Kettenverlängerungs- und/oder Vernetzungsmitteln mit
c) organischen, gegebenenfalls modifizierten Polyisocyanaten

in Gegenwart von

d) Treibmitteln,
e) Katalysatoren

sowie gegebenenfalls

f) Hilfsmitteln und/oder Zusatzstoffen

und die hierfür verwendbaren neuen Polyoxypropylen-polyolen und Polyoxyethylen-polyoxypropylen-polyolen.

Die Herstellung von Urethangruppen enthaltenden Schaumstoffen - im folgenden abgekürzt PU-Schaumstoffe genannt - mit den verschiedenartigsten mechanischen Eigenschaften durch Umsetzung von höhermolekularen Polyhydroxylverbindungen und gegebenenfalls niedermolekularen Kettenverlängerungs- oder Vernetzungsmitteln mit organischen Polyisocyanaten in Gegenwart von Katalysatoren, Treibmitteln und gegebenenfalls Hilfsmitteln und/oder Zusatzstoffen ist bekannt und wird in zahlreichen Patent- und Literaturveröffentlichungen beschrieben. Bei geeigneter Wahl der Aufbaukomponenten lassen sich nach diesen Verfahren sowohl weiche, elastische wie halbharte oder harte PU-Schaumstoffe herstellen.

Die Herstellung von Urethan- und Isocyanuratgruppen gebunden enthaltenden Schaumstoffen ist ebenfalls nicht neu. Nach diesem Verfahren werden organische Polyisocyanate in Gegenwart von Katalysatoren partiell cyclisiert und polymerisiert und die erhaltenen Isocyanuratgruppen (PIR) enthaltenden Polyisocyanate danach mit Polyhydroxylverbindungen in Gegenwart von PU-Katalysatoren und Treibmitteln zur Reaktion gebracht. Nach einer anderen Verfahrensweise werden die organischen Polyisocyanate in Gegenwart von unterschüssigen Mengen an Polyhydroxylverbindungen, verschiedenartig wirkenden Katalysatoren und Treibmitteln gleichzeitig partiell cyclisiert und die Polyhydroxylverbindungen an die gebildeten isocyanuratgruppenhaltigen und unmodifizierten Polyisocyanate addiert.

Eine zusammenfassende Übersicht über die Herstellung von PU-Hartschaumstoffen und PU-PIR-Schaumstoffen wird z.B. publiziert in der Monographie von J.H. Saunders und K.C. Frisch "High Polymers", Band XVI, Polyurethanes, Teile 1 und 2, Verlag Interscience Publishers 1962 bzw. 1964 oder dem Kunststoff-Handbuch, Band VII, Polyurethane, Carl-Hanser Verlag, München, 1. Auflage 1966 und 2. Auflage 1983.

Zur Herstellung derartiger PU-Hartschaumstoffe oder PU-PIR-Schaumstoffe haben sich als höhermolekulare Polyhydroxylverbindungen besonders Polyester-polyole, Polyoxyalkylen-polyole oder Mischungen aus Polyester- und Polyoxyalkylen-polyolen, z.B. solchen mit einer Funktionalität von 3 bis 8 und einer Hydroxylzahl von 200 bis 850, bewährt.

Nach Angaben der GB-A-1 404 822 werden z.B. geeignete Polyester-polyole durch Polykondensation von aliphatischen Dicarbonsäuren, vorzugsweise Adipinsäure, mit höherwertigen Alkoholen, wie z.B. Glycerin, Trimethylolpropan und/oder Pentaerythrit hergestellt.

Die GB-A-1 223 415 beschreibt Mischungen aus aliphatischen Dicarbonsäuren und geringeren Mengen an aromatischen Dicarbonsäuren, wie z.B. Phthalsäure, Terephthalsäure oder Tetrachlorphthalsäure, zur Herstellung von geeigneten Polyester-polyolen.

Nach Angaben der DE-A-30 35 677 (US-A-4 237 238) haben sich zur Herstellung von PU-PIR-Schaumstoffen besonders Polyhydroxylverbindungen bewährt, die durch Umesterung von Rückständen aus der Dimethylterephthalatherstellung mit einem Glykol eines Molekulargewichtes von 60 bis 400 erhalten werden.

2

Als Polyoxyalkylen-polyole zur Herstellung von PU-Hartschaumstoffen finden insbesondere Polyoxypropylen-polyole Verwendung, zu deren Herstellung als Startermoleküle Mischungen aus Alkanolaminen und mehrwertigen Alkoholen eingesetzt werden.

Gemäß GB-A-1 154 161 besitzen geeignete Alkanolamine mindestens 3 reaktive Wasserstoffatome und geeignete mehrwertige Alkohole 6 oder mehr reaktive Wasserstoffatome wie z.B. Saccharose, Sorbit oder Methylglucosid. Die DE-C-1 543 305 (US-A-3 332 934 und US-A-3 424 700) beschreibt hingegen als Startermoleküle Mischungen aus Triethanolamin und einem Costarter aus der Gruppe Rohrzucker, Sorbit oder α-Methylglucosid, wobei pro 100 Gew.-Teile Triethanolamin 55 bis 575 Gew.-Teile Costarter Verwendung finden und die Polyoxyalkylierung in Abwesenheit von Alkalihydroxidkatalysatoren durchgeführt wird.

Nachteilig an den beschriebenen Verfahren ist, neben dem hohen Preis für die Polyester-polyole und deren Hydrolyseempfindlichkeit, insbesondere die hohe Viskosität der Polyester- und Polyoxyalkylen-polyole, die gemäß DE-C-1 543 305 Werte von über 3.500 m•Pa•s, vorzugsweise von über 18.000 m•Pa•s besitzen. Polyhydroxylverbindungen mit derartig hohen Viskositäten können auf konventionellen Verschäumungsvorrichtungen, insbesondere nach dem Zweikomponenten-Verfahren, nur unter Überwindung beträchtlicher Schwierigkeiten verarbeitet werden.

Die Aufgabe der vorliegenden Erfindung bestand darin, PU-Hartschaumstoffe oder PU-PIR-Schaumstoffe aus Formulierungen herzustellen, die sich auf konventionellen Vorrichtungen besser verarbeiten lassen und eine hohe Verarbeitungssicherheit über einen breiten Bereich der Reaktionsparameter aufweisen, ohne das Niveau der mechanischen Eigenschaften bekannter Schaumstoffe zu verschlechtern.

Diese Aufgabe konnte überraschenderweise gelöst werden durch die Verwendung von durch Polyoxyalkylierung einer speziellen Startermolekülmischung erhaltenen Polyhydroxylverbindungen zur Herstellung der Schaumstoffe.

Gegenstand der Erfindung ist somit ein Verfahren zur Herstellung von Urethan- oder Urethan- und Isocyanuratgruppen enthaltenden Hartschaumstoffen nach dem Polyisocyanat-polyadditionsverfahren durch Umsetzung von

a) mindestens einer Polyhydroxylverbindung und

b) gegebenenfalls niedermolekularen Kettenverlängerungs- und/oder Vernetzungsmitteln mit

c) organischen und/oder modifizierten organischen Polyisocyanaten

in Gegenwart von

d) Treibmitteln,

e) Katalysatoren

sowie gegebenenfalls

f) Hilfsmitteln und/oder Zusatzstoffen

das dadurch gekennzeichnet ist, daß man als Polyhydroxylverbindung (a) verwendet Polyoxypropylen-polyole oder Polyoxyethylen-polyoxypropylen-polyole, die bis zu 30 Gew.-%, bezogen auf das Gewicht der Alkylenoxideinheiten, mittelständige gebundene Oxyethyleneinheiten aufweisen, mit sekundären Hydroxylgruppen,

einer Funktionalität von 3,5 bis 4,3, einer Hydroxylzahl von 350 bis 650 und einer Viskosität von 500 bis 2.500 mPa•s bei 23°C,

die hergestellt werden durch anionische Polymerisation von 1,2-Propylenoxid oder Ethylenoxid und 1,2-Propylenoxid an eine Startermolekülmischung, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon.

Nach einer bevorzugten Ausführungsform werden die Urethan- oder Urethan- und Isocyanuratgruppen gebunden enthaltenden Hartschaumstoffe nach einem mehrstufigen Verfahren hergestellt, wobei man

1. in der ersten Reaktionsstufe an eine Startermolekülmischung mit einer Funktionalität von 3,5 bis 4,3, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon,

in Gegenwart mindestens eines basischen Katalysators bei erhöhter Temperatur 1,2-Propylenoxid oder Ethylenoxid und 1,2-Propylenoxid in einer solchen Menge polymerisiert, daß die erhaltenen Polyoxypropylen-polyole oder Polyoxyethylen-polyoxypropylen-polyole mit sekundären Hydroxylgruppen eine Hydroxylzahl von 350 bis 650 und eine Viskosität von 500 bis 2.500 mPa•s besitzen und der Maßgabe, daß die Polyoxyethylen-polyoxypropylen-polyole bis zu 30 Gew.-%, bezogen auf das Gewicht der Alkylenoxideinheiten, mittelständig gebundene Oxyethyleneinheiten aufweisen, und

2. in einer zweiten Reaktionsstufe

    a) die erhaltenen Polyoxypropylen-polyole oder Polyoxyethylen-polyoxypropylen-polyole und

    b) gegebenenfalls niedermolekulare Kettenverlängerungs- und/oder Vernetzungsmittel mit

    c) organischen und/oder modifizierten organischen Polyisocyanaten

in Gegenwart von

    d) Treibmitteln,

    e) Katalysatoren

sowie gegebenenfalls

    f) Hilfsmitteln und/oder Zusatzstoffen

zur Reaktion bringt.

Zweckmäßige und daher bevorzugt angewandte Ausgestaltungen des erfindungsgemäßen Verfahrens sind Gegenstände der Ansprüche 2, 3 und 5 bis 7.

Andere Gegenstände der Erfindung sind ferner die neuen Polyoxypropylen-polyole oder Polyoxyethylen-polyoxypropylen-polyole mit sekundären Hydroxylgruppen,

einer Funktionalität von 3,5 bis 4,3,

einer Hydroxylzahl von 350 bis 650 und

einer Viskosität von 500 bis 2.500 mPa•s bei 23°C,

wobei die zuletzt genannten Polyole bis zu 30 Gew.-%, bezogen auf das Gewicht der Alkylenoxideinheiten, mittelständig gebundene Oxyethyleneinheiten aufweisen, und

die hergestellt werden durch anionische Polymerisation von 1,2-Propylenoxid oder Ethylenoxid und 1,2-Propylenoxid bei erhöhter Temperatur an eine Startermolekülmischung, die bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon,

gemäß Anspruch 8 und neue Mischungen aus Polyhydroxylverbindungen zur Herstellung von Polyisocyanat-polyadditionsprodukten, die bestehen aus, bezogen auf das Gesamtgewicht der Polyhydroxylverbindungen (a),

ai) mindestens 10 Gew.-%, vorzugsweise 20 bis 70 Gew.-% mindestens eines Polyoxypropylen-polyols oder mindestens eines Polyoxyethylen-polyoxypropylen-polyols mit den in den Ansprüchen 8 oder 9 genannten Merkmalen und

bi) bis zu 90 Gew.-%, vorzugsweise 80 bis 30 Gew.-% mindestens eines üblichen Polyoxyalkylen-polyols mit einer Funktionalität von 2 bis 8, vorzugsweise von 3 bis 8 und einer Hydroxylzahl von 80 bis 850, vorzugsweise 300 bis 800.

Da bekanntermaßen Polyoxyalkylen-polyole mit einer hohen Funktionalität auch eine sehr hohe Viskosität aufweisen, war überraschend, daß die Verwendung dieser speziellen Startermolekülmischung zu Polyoxyalkylen-polyolen führt, die in einem für Hartschaum-polyether-polyole üblichen Hydroxylzahlbereich eine beträchtlich geringere Viskosität besitzen und daher auf konventionellen Verschäumungsvorrichtungen für Zweikomponentensysteme problemlos verarbeitbar sind. Eine gute Durchhärtung der gebildeten Schaumstoffe wird durch die genügend hohe Funktionalität der Polyoxyalkylen-polyole von mindestens 3,5 gewährleistet. Die neuen Polyoxyalkylen-polyole eignen sich insbesondere zur Herstellung von Fluorchlorkohlenwasserstoff-reduzierten oder -freien PU-Hartschaumstoffen oder PU-PIR-Schaumstoffen, da durch ihren Einsatz niedrigviskose Systemkomponenten A erhalten werden, die keiner zusätzlichen viskositätssenkender Verdünnung mit Fluorchlorkohlenwasserstoffen bedürfen. Überraschend und vorteilhaft ist ferner, daß die hergestellten Schaumstoffe auf Basis der neuen Polyoxyalkylen-polyole trotz einer geringeren Funktionalität zum Teil rascher durchhärten als Schaumstoffe aus konventionellen Hartschaumpolyether-polyolen, so daß die Formstandzeit von PU-Schaumstoff-Formkörpern vielfach verkürzt und die Raum-Zeit-Ausbeute erhöht werden kann.

Zur Herstellung der neuen, erfindungsgemäß verwendbaren Polyoxypropylen-oder Polyoxyethylen-polyoxypropylen-polyole und zu den für das erfindungsgemäße Verfahren zur Herstellung der Urethan- oder Urethan- und Isocyanuratgruppen enthaltenden Hartschaumstoffen geeigneten anderen Ausgangskomponenten ist im einzelnen folgendes auszuführen.

a) Die neuen Polyoxypropylen-polyole oder Polyoxyethylen-polyoxypropylen-polyole besitzen, wie bereits ausgeführt wurde, im wesentlichen sekundäre Hydroxylgruppen, eine Funktionalität von 3,5 bis 4,3, vorzugsweise von 3,7 bis 4,3 und insbesondere von 3,9 bis 4,1, eine Hydroxylzahl von 350 bis 650, vorzugsweise von 400 bis 600 und insbesondere von 420 bis 585 und eine Viskosität bei 23°C von 500 bis 2.500 mPa•s, vorzugsweise von 750 bis 2000 mPa•s und insbesondere von 780 bis 1.900 mPa•s. Sofern die Polyoxyethylen-polyoxypropylen-polyole mittelständig Oxyethyleneinheiten gebunden haben, beträgt ihre Menge, bezogen auf das Gesamtgewicht an polymerisiertem Ethylenoxid und 1,2-Propylenoxid, bis zu 30 Gew.-%, vorzugsweise 3 bis 30 Gew.-% und insbesondere 8 bis 26 Gew.-%.

Erfindungsgemäß werden zur Herstellung derartiger Polyoxypropylen-polyole oder Polyoxyethylen-polyoxypropylen-polyole als Startermoleküle Mischungen verwendet, die enthalten oder vorzugsweise bestehen aus, bezogen auf das Gesamtgewicht,

a1) 40 bis 80 Gew.-%, vorzugsweise 40 bis 60 Gew.-% und insbesondere 45 bis 55 Gew.-% Hexantetrole(n),

a2) 1 bis 30 Gew.-%, vorzugsweise 3 bis 20 Gew.-% und insbsondere 8 bis 15 Gew.-% Hexantriole-(n),

a3) 0 bis 35 Gew.-%, vorzugsweise 0,01 bis 35 Gew.-% und insbesondere 20 bis 32 Gew.-% Glycerin und

a4) 0 bis 15 Gew.-%, vorzugsweise 0,01 bis 15 Gew.-% und insbesondere 5 bis 12 Gew.-% Sorbit oder Mannit oder Mischungen aus Sorbit und Mannit.

Eine geeignete Startermolekülmischung zur Herstellung der erfindungsgemäß verwendbaren Polyoxypropylen- oder Polyoxyethylen-polyoxypropylen-polyole kann durch Vermischen der genannten mehrwertigen Alkohole in den entsprechenden Mengenverhältnissen erhalten werden.

Zur Herstellung der Startermolekülmischung wird jedoch vorzugsweise Saccharose in wäßrigem Medium in Gegenwart eines Katalysators, dessen aktive Masse, berechnet auf den Gehalt der Metalle, im wesentlichen besteht aus 0 bis 100 Gew.-% Kobalt, 0 bis 85 Gew.-% Kupfer und 0 bis 80 Gew.-% Mangan, hydrogenolysiert zu einer Alkoholmischung, die als wesentliche Bestandteile enthält: Sorbit, Mannit, Hexantetrole, Hexantriole, Glycerin, Ethylen-, 1,2-Propylen-, 1,2-Butylen-glykole und einwertige Alkohole, wie Ethanol, n-Propanol und 2-Butanol, anschließend werden aus dieser Mischung die flüchtigen Bestandteile durch fraktionierte Destillation abgetrennt und der Destillationssumpf als Startermolekülmischung verwendet. Nach einer insbesondere bevorzugten Verfahrensvariante enthält die katalytisch aktive Masse des Katalysators von den genannten Metallen Kobalt, Kupfer und Mangan entweder nur Kobalt oder mindestens zwei dieser Metalle, außerdem können dem Katalysator noch anorganische Polysäuren und/oder Heteropolysäuren zugesetzt sein und der zu hydrierenden Saccharoselösung können 0,01 bis 5 Gew.-% einer oder mehrerer basisch wirkender Metallverbindungen der Metalle der ersten und zweiten Hauptgruppe sowie der Gruppe IIIA des Periodensystems der Elemente, publiziert im Handbook of Chemistry and Physics, 47 Edition, von The Chemical Rubber Co. (2310 Superior Avenue, Cleveland, Ohio, 44114), einverleibt werden. Als basisch wirkende Verbindungen der genannten Art seien die Hydroxide, Oxide und/oder Carbonate des Lithiums, Natriums, Kaliums, Magnesiums und/oder Calciums beispielhaft genannt. Die Hydrierung wird zweckmäßigerweise bei einem Wasserstoffdruck von 200 bis 700 bar, vorzugsweise von 200 bis 300 bar und einer Temperatur im Bereich von 180 bis 280°C, vorzugsweise von 180 bis 230°C durchgeführt. Verfahren zur katalytischen Hydrogenolyse von Saccharose werden z.B. beschrieben in der EP-A- 0 344 561 und DE-A-39 28 285, wobei die Beschreibungen dieser Erfindungsgegenstände als Teil der vorliegenden Patentbeschreibung zu betrachten sind.

Aus der durch katalytische Hydrierung erhaltenen, vom Kontakt befreiten Alkoholmischung werden alle Ionen durch sukzessive Behandlung mit einem stark sauren und einem stark basischen Ionenaustauscher entfernt und danach die flüchtigen Alkohole durch fraktionierte Destillation abgetrennt.

Der verbleibende Destillationsrückstand, der aus Hexantetrolen und Hexantriolen sowie gegebenenfalls aus Glycerin, Sorbit und/oder Mannit besteht, wird vorzugsweise durch anionische Polymerisation von Alkylenoxiden in Gegenwart von Alkalihydroxiden, wie z.B. Natrium- oder Kaliumhydroxid, oder Alkalialkoholaten, wie z.B. Natriummethylat, Natrium- oder Kaliumethylat, Kaliumisopropylat oder Natriumbutylat als Katalysatoren alkoxyliert. Die mehrwertigen Alkohole der Startermolekülmischung werden hierzu partiell in die entsprechenden Alkoholate übergeführt. Je nach verwendetem Katalysator wird dabei gegebenenfalls gebildetes Wasser oder der gegebenenfalls gebildete niedrigsiedende Alkohol abdestilliert und bei Temperaturen von 90 bis 150°C, vorzugsweise von 100 bis 130°C, das 1,2-Propylenoxid oder Ethylenoxid und danach 1,2-Propylenoxid in dem Maße wie die Alkylenoxide abreagieren, beispielsweise in 4 bis 30 Stunden, vorzugsweise 6 bis 12 Stunden bei Atmosphärendruck oder gegebenenfalls unter erhöhtem Druck bei 1,1 bis 20 bar, vorzugsweise 1,1 bis 7 bar, in das Reaktionsmedium eingetragen. Nach Beendigung der Alkoxylierung wird das überschüssige 1,2-Propylenoxid oder bei der Herstellung der Polyoxyethylen-polyoxypropylen-polyole zunächst das überschüssige Ethylenoxid und danach nach beendeter Propoxylierung das überschüssige 1,2-Propylenoxid bei einer Temperatur im Bereich von 90 bis 150°C unter vermindertem Druck, z.B. bei 0,01 bis 20 mbar, vorzugsweise 0,1 bis 10 mbar, abdestilliert.

Die hergestellten, vorzugsweise Alkaliionen enthaltenden Polyoxyalkylen-polyole werden zweckmäßigerweise durch Zugabe von organischen Säuren, wie z.B. Zitronensäure, Essigsäure, Ameisensäure u.a., oder anorganischen Säuren, wie z.B. Schwefel Säure, Phosphorsäure oder Kohlensäure sowie gegebenenfalls von Adsorptionsmitteln nach bekannten Methoden gereinigt.

Zur Herstellung der Urethan- oder Urethan- und Isocyanuratgruppen gebunden enthaltenden Hartschaumstoffen können die erfindungsgemäß verwendbaren Polyoxypropylen- oder Polyoxyethylen-polyoxypropylen-polyole als einzige Polyhydroxylverbindung verwendet werden. Zur Modifizierung der mechanischen Eigenschaften der Schaumstoffe oder aus verarbeitungstechnischen Gründen, z.B. zur Viskositätsverminderung der Polyhydroxylverbindungen, kann es zweckmäßig sein als Polyhydroxylverbindungen (a) Mischungen zu verwenden, die enthalten oder vorzugsweise bestehen, bezogen auf das Gesamtgewicht von (a), aus

ai) mindestens 10 Gew.-%, vorzugsweise 20 bis 70 Gew.-% mindestens eines Polyoxypropylenpolyols und/oder mindestens eines Polyoxyethylen-polyoxypropylen-polyols mit sekundären Hydroxylgruppen und einer Funktionalität, Hydroxylzahl und Viskosität in dem erfindungsgemäß erforderlichen Bereich, hergestellt unter Einsatz der erfindungsgemäß erforderlichen Startermolekülmischungen und

aii) bis zu 90 Gew.-%, vorzugsweise 80 bis 30 Gew.-% mindestens eines Polyoxyalkylen-polyols mit einer Funktionalität von 2 bis 8, vorzugsweise von 3 bis 8 und insbesondere 3 bis 6 und einer Hydroxylzahl von 80 bis 850, vorzugsweise von 300 bis 800 und insbesondere von 350 bis 700, wie sie bekannterweise zur Herstellung von PU-Hartschaumstoffen eingesetzt werden.

Die hierfür geeigneten Polyoxyalkylen-polyole (aii) können nach bekannten Verfahren, beispielsweise nach der oben beschriebenen anionischen Polymerisation in Gegenwart von basischen Katalysatoren und unter Verwendung von di- bis octafunktionellen Startermolekülen oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest, vorzugsweise Ethylenoxid und/oder insbesondere 1,2-Propylenoxid hergestellt werden.

Zusätzlich zu dem bevorzugt verwendeten Ethylenoxid, Mischungen aus Ethylenoxid und 1,2-Propylenoxid und insbesondere 1,2-Propylenoxid eignen sich als Alkylenoxide beispielsweise Tetrahydrofuran, 1,3-Propylenoxid, 1,2- bzw. 2,3-Butylenoxid, Styroloxid und Epichlorhydrin. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4-, 2,6- Toluylendiamin und 4,4'-, 2,4'- und 2,2'-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak.

Vorzugsweise verwendet werden mehrwertige, insbesondere drei- und/oder höherwertige Alkohole oder Oxyalkylenglykole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Sucrose.

Als Polyoxyalkylen-polyole (aii) eignen sich ferner Melamin-Polyether-polyol-Dispersionen gemäß EP-A-23 987 (US-A-4 293 657), Polymer-Polyether-polyol-Dispersionen, hergestellt aus Polyepoxiden und Epoxidharzhärtern in Gegenwart von Polyether-polyolen gemäß DE 29 43 689 (US 4 305 861), Dispersionen von aromatischen Polyestern in Polyhydroxylverbindungen gemäß EP-A-62 204 (US-A-4 435 537) oder DE-A-33 00 474, Dispersionen von organischen und/oder anorganischen Füllstoffen in Polyhydroxylverbindungen gemäß EP-A-11 751 (US 4 243 755), Polyharnstoff-Polyether-polyol-Dispersionen gemäß DE-A-31 25 402, Tris-(hydroxyalkyl)isocyanurat-Polyether-polyol-Dispersionen gemäß EP-A-136 571 (US 4 514 526) und Kristallitsuspension gemäß DE-A-33 42 176 und DE-A-33 42 177) (US 4 560 708), wobei die Ausführungen in den genannten Patentveröffentlichungen als Bestandteil der Patentbeschreibung zu betrachten sind.

Als Polyoxyalkylen-polyole (aii) besonders bewährt haben sich und daher vorzugsweise verwendet werden: mit Sucrose gestartete Polyoxyalkylen-polyole mit einer Hydroxylzahl von 300 bis 500, vorzugsweise 350 bis 450 auf der Grundlage von 1,2-Propylenoxid oder 1,2-Propylenoxid und Ethylenoxid, mit Sorbit gestartete Polyoxyalkylen-polyole mit einer Hydroxylzahl von 400 bis 600, vorzugsweise von 450 bis 550 auf der Grundlage von 1,2-Propylenoxid oder 1,2-Propylenoxid und Ethylenoxid, mit Ethylendiamin gestartete Polyoxyalkylen-polyole mit einer Hydroxylzahl von 700 bis 850, vorzugsweise von 750 bis 800 auf der Grundlage von 1,2-Propylenoxid und Polyoxyalkylen-polyole mit einer Hydroxylzahl von 400 bis 600, vorzugsweise von 450 bis 550 auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermoleküle.

Die Polyoxyalkylen-polyole (aii) können einzeln oder in Form von Mischungen verwendet werden.

b) Die Urethan- oder Urethan- und Isocyanuratgruppen gebunden enthaltende Hartschaumstoffe können ohne oder unter Mitverwendung von Kettenverlängerungs-und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemischen davon als vorteilhaft erweisen. Als Kettenverlängerungs-und/oder Vernetzungsmittel verwendet werden vorzugsweise Alkanolamine und insbesondere Diole und/oder Triole mit Molekulargewichten kleiner als 400, vorzugsweise von 60 bis 300. In Betracht kommen beispielsweise Alkanolamine, wie z.B. Ethanolamin und/oder Isopropanolamin, Dialkanolamine wie z.B. Diethanolamin, Diisopropanolamin, N-Alkyl-dialkanolamine, wie z.B. N-Methyl-, N-Ethyldiethanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-hydroxyethyl)ethylendiamin und N,N,N',N'-Tetra(2-hydroxypropyl)-ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyoxyalkylenether auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.

Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 5 Gew.-%, bezogen auf das Gewicht der Polyhydroxylverbindung zum Einsatz.

c) Als organische und/oder modifizierte organische Polyisocyanate kommen die an sich bekannten aliphatischen, cycloaliphatischen, araliphatischen und vorzugsweise aromatischen mehrwertigen Isocyanate in Frage.

Im einzelnen seien als organische Polyisocyanate beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch partielle chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 28 bis 22 Gew.-%, bezogen auf das Gesamtgewicht, beispielsweise mit niedermolekularen Diolen, Triolen, Dialkylenglykolen, Trialkylenglykolen oder Polyoxyalkylen-glykolen mit Molekulargewichten bis 1500 modifiziertes 4,4'-Diphenylmethan-diisocyanat oder 2,4- bzw. 2,6-Toluylendiisocyanat, wobei als Di- bzw. Polyoxyalkylen-glykole, die einzeln oder als Gemische eingesetzt werden können; beispielsweise genannt seien: Diethylen-, Dipropylen-glykol, Polyoxyethylen-, Polyoxypropylen-und Polyoxypropylen-polyoxyethylen-glykole oder -triole. Geeignet sind auch NCO-Gruppen enthaltende Prepolymere mit NCO-Gehalten von 25 bis 9 Gew.-%, vorzugsweise von 21 bis 14 Gew.-%, bezogen auf das Gesamtgewicht, hergestellt aus den oben beschriebenen Polyoxyalkylenpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 28 bis 22 Gew.-%, bezogen auf das Gesamtgewicht, z.B. auf Basis von 4,4'-, 2,4'- und/oder 2,2'-Diphenylmethan-diisocyanat und/oder Roh-MDI mit einem NCO-Gehalt von 31±2 Gew.-% und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Anwendung zur Herstellung der PU-Hartschaumstoffe: Roh-MDI oder Mischungen aus modifizierten Urethangruppen und/oder Isocyanuratgruppen enthaltenden organischen Polyisocyanaten mit einem NCO-Gehalt von 28 bis 22 Gew.-%, vorteilhafterweise solchen auf Basis von 4,4'-Diphenylmethan-diisocyanat, Diphenylmethan-diisocyanat-Isomerengemischen oder Roh-MDI und insbesondere Roh-MDI mit einem NCO-Gehalt von 31±2 Gew.-% und mit einem Diphenylmethan-diisocyanat-Isomerengehalt von 30 bis 80 Gew.-%, vorzugsweise von 30 bis 55 Gew.-%.

d) Zu Treibmitteln (d), welche zur Herstellung der Urethan- oder Urethan- und Isocyanuratgruppen enthaltenden Hartschaumstoffe verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 6,5 Gew.-Teile, vorzugsweise 1,0 bis 5,5 Gew.-Teile und insbesondere 2,0 bis 5,0 Gew.-Teile, bezogen auf 100 Gew.-Teile der höhermolekularen Polyhydroxylverbindungen (a).

Im Gemisch mit Wasser können auch physikalisch wirkende Treibmittel eingesetzt werden oder es können ausschließlich physikalisch wirkende Treibmittel Anwendung finden. Geeignet sind Flüssigkeiten, welche gegenüber den organischen, gegebenenfalls modifizierten Polyisocyanaten (c) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, technische Pentangemische, n- und iso-Butan und Propan, Ether, wie Furan, Dimethylether und Diethylether, Ketone, wie Aceton und Methylethylketon, Ester wie Ethylacetat und Methylformiat und vorzugsweise halogenierte Kohlenwasserstoffe, wie Methylenchlorid, Difluormethan, Trichlorfluormethan, Dichlordifluormethan, Dichlormonofluormethan, 1,1,1-Dichlorfluorethan, 1,1,1-Chlordifluorethan, Dichlortetrafluorethan, Tetrafluorethan, 1,1,2-Trichlor-1,2,2-trifluorethan und Heptafluorpropan, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.

Die erforderliche Menge an physikalisch wirkenden Treibmitteln kann in Abhängigkeit von der gewünschten Schaumstoffdichte auf einfache Weise ermittelt werden und beträgt ungefähr 10 bis 30 Gew.-Teile, vorzugsweise 14 bis 22 Gew.-Teile pro 100 Gew.-Teile der höhermolekularen Polyhydroxylverbindungen (a), wobei sich ihr Anteil bei der Mitverwendung von Wasser anteilmäßig verringert. Gegebenenfalls kann es zweckmäßig sein, die gegebenenfalls modifizierten Polyisocyanate (c) mit dem physikalisch wirkenden Treibmittel zu mischen und dadurch ihre Viskosität zu verringern.

e) Als Katalysatoren (e) werden insbesondere Verbindungen verwendet, die die Reaktion der Hydroxylgruppen enthaltenden Verbindungen der Komponenten (a) und gegebenenfalls (b) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salzevon organischen Carbonsäu-ren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin oder -hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindungen (a).

f) Der Reaktionsmischung zur Herstellung der PU- oder PU-PIR-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (a) angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke und/oder Blähgraphit zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe werden die organischen, gegebenenfalls modifizierten Polyisocyanate (c), die höhermolekularen Polyhydroxylverbindungen mit mindestens zwei reaktiven Wasserstoffatomen (a) und gegebenenfalls Kettenverlängerungsmittel und/oder Vernetzungsmittel (b) in solchen Mengen zur Umsetzung gebracht, daß das Äquivalenz-Verhältnis von NCO-Gruppen der Polyisocyanate (c) zur Summe der reaktiven Wasserstoffatome der Komponenten (a) und gegebenenfalls (b) 0,85 bis 1,25:1, vorzugsweise 0,95 bis 1,15:1 und insbesondere ungefähr 1,0 bis 1,10:1 beträgt. Sofern die Urethangruppen enthaltende Hartschaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (c) zur Summe der reaktiven Wasserstoffatome der Komponente (a) und gegebenenfalls (b) von 1,5 bis 10:1, vorzugsweise 1,5 bis 6:1 angewandt.

Die PU- und PIR-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Aufbaukomponente (a), (d), (e) und gegebenenfalls (b) und (f) in der Komponente (A) zu vereinigen und als Komponente (B) die organischen Polyisocyanate, modifizierten Polyisocyanate (c) oder Mischungen aus den genannten Polyisocyanaten und gegebenenfalls Treibmittel (d) zu verwenden.

Die Ausgangskomponenten werden bei einer Temperatur von 15 bis 90 °C, vorzugsweise von 20 bis 35 °C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt oder das Formwerkzeug wird nach der Befüllung geschlossen und die Reaktionsmischung unter Verdichtung, z.B. mit einem Verdichtungsgrad von 1,1 bis 6, vorzugsweise von 1,2 bis 4 und insbesondere 1,2 bis 2, zur Bildung von Formkörpern aufschäumen lassen. Zur Bildung von Verbundelementen beschichtet man zweckmäßigerweise die Oberseite einer Deckschicht, z.B. durch Begießen oder Besprühen, mit der schaumfähigen Reaktionsmischung und läßt diese aufschäumen und nach Beschichten der aufgeschäumten Reaktionsmischung mit einer zweiten Deckschicht zum Hartschaumstoff aushärten.

Die nach dem erfindungsgemäßen Verfahren hergestellten PU- und PU-PIR-Hartschaumstoffe besitzen freigeschäumt vorzugsweise Dichten von 20 bis 50 g/l und formgeschäumt vorzugsweise Dichten von 30 bis 45 g/l. Die aus den erfindungsgemäßen Polyoxypropylen-polyolen oder Polyoxyethylen-polyoxypropylen-polyolen hergestellten geschlossenzellige, gegebenenfalls flammschutzmittelhaltige Urethangruppen enthaltende Polyisocyanuratschaumstoffe genügen z.B. den Brandschutzanforderungen nach DIN 4102, Teil 2 (B2 im Kleinbrennertest).

Die PU- und PU-PIR-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen. Die Produkte eignen sich ferner zur Isolierung von erwärmten Materialien, als Rohrschalen und Platten.

Die Mischungen der Polyhydroxylverbindungen, bestehend aus mindestens 10 Gew.-% mindestens eines erfindungsgemäß verwendbaren Polyoxypropylen-oder Polyoxyethylen-polyoxypropylen-polyols (ai) oder Mischungen davon und bis zu 90 Gew.-% mindestens eines üblichen Polyoxyalkylen-polyols (aii) mit einer Funktionalität von 2 bis 8 und einer Hydroxylzahl von 80 bis 850 finden Verwendung zur Herstellung von Polyisocyanat-polyadditionsprodukten.

Beispiele

Herstellung der erfindungsgemäß verwendbaren Polyoxypropylen- und Polyoxyethylen-polyoxypropylen-polyole

Beispiel 1

1570 g einer Startermolekülmischung, die bestand aus, bezogen auf das Gesamtgewicht,
50 Gew.-% Hexantetrolen,
10 Gew.-% Hexantriolen,
30 Gew.-% Glycerin und
10 Gew.-% eines Sorbit-Mannit-Gemisches im Gewichtsverhältnis 9:1
wurden in einem 10 Liter-Rührautoklaven mit
37,4 g einer 45 gew.-%igen wäßrigen Kaliumhydroxidlösung vermischt und die mehrwertigen Alkohole bei einer Temperatur von 100 °C unter vermindertem Druck (1 mbar) und Abdestillation des Wassers in die entsprechenden Kaliumalkoholate übergeführt.

Der Reaktionsmischung wurden danach bei 110 °C und Normaldruck innerhalb eines Zeitraumes von 8 Stunden 4040 g 1,2-Propylenoxid einverleibt.

Nach dem Abdestillieren des nicht umgesetzten 1,2-Propylenoxids bei 110 °C und 5 mbar, ließ man die Reaktionsmischung auf ungefähr 90 °C abkühlen, versetzte diese mit 200 g Magnesiumsilikat und 100 g Wasser und filtrierte anschließend die Feststoffe ab. Das Wasser wurde unter vermindertem Druck (1 mbar) abdestilliert und das Polyoxypropylen-polyol mit 2,6-Di-tert.-butyl-p-kresol stabilisiert.

Man erhielt ein Polyoxypropylen-polyol mit einer Funktionalität von 4, einer Hydroxylzahl von 407, einer Viskosität von 1043 mPa•s bei 23 °C, einem Restwassergehalt von 0,015 Gew.-% und einem pH-Wert von 8,6.

Beispiel 2

Man verfuhr analog den Angaben des Beispiels 1, verwendete jedoch anstelle von 4040 g lediglich 2920 g 1,2-Propylenoxid.

Man erhielt ein Polyoxypropylen-polyol mit einer Funktionalität von 4, einer Hydroxylzahl von 560, einer Viskosität von 1865 mPa•s bei 23°C, einem Restwassergehalt von 0,02 Gew.-% und einem pH-Wert von 8,55.

Beispiel 3

1570 g der in Beispiel 1 beschriebenen Startermolekülmischung wurde analog den Angaben des Beispiels 1 zunächst mit 1012 g Ethylenoxid in 3 Stunden oxethyliert. Nach Abtrennung des nicht umgesetzten Ethylenoxids bei 110°C und 1 mbar wurde die Reaktionsmischung bei 110°C unter Normaldruck innerhalb 6 Stunden mit 3028 g 1,2-Propylenoxid oxpropyliert.

Die Aufarbeitung der Reaktionsmischung wurde analog den Angaben des Beispiels 1 durchgeführt.

Man erhielt ein Polyoxyethylen(25 Gew.-%)-polyoxypropylen(75 Gew.-%)-polyol mit im wesentlichen sekundären Hydroxylgruppen, einer Funktionalität von 4, einer Hydroxylzahl von 474, einer Viskosität von 796 mPa•s bei 23°C, einem Restwassergehalt von 0,015 Gew.-% und einem pH-Wert von 8,6.

Beispiel 4

Man verfuhr analog den Angaben des Beispiels 3, verwendete jedoch als Alkylenoxide zunächst 920 g Ethylenoxid und anschließend 2000 g 1,2-Propylenoxid.

Man erhielt ein Polyoxyethylen(25 Gew.-%)-polyoxypropylen(75 Gew.-%)-polyol mit im wesentlichen sekundären Hydroxylgruppen, einer Funktionalität von 4, einer Hydroxylzahl von 585, einer Viskosität von 1257 mPa•s bei 23°C, einem Restwassergehalt von 0,01 Gew.-% und einem pH-Wert von 8,5.

Herstellung von Urethangruppen enthaltenden Hartschaumstoffen

Beispiele 5 bis 8 und Vergleichsbeispiele I und II

Zur Herstellung der Beispiele und Vergleichsbeispiele fanden die in Tabelle I genannten höhermolekularen Polyhydroxylverbindungen Verwendung.

Tabelle I

| Polyhydroxylverbindungen | Funktionalität | OH-Zahl | Viskosität [mPa·s] bei 23°C |
|---|---|---|---|
| Polyol A, hergestellt gemäß Beispiel 1 | 4 | 407 | 1043 |
| Polyol B, hergestellt gemäß Beispiel 2 | 4 | 560 | 1865 |
| Polyol C, hergestellt gemäß Beispiel 3 | 4 | 474 | 796 |
| Polyol D, hergestellt gemäß Beispiel 4 | 4 | 585 | 1257 |
| Polyol E, hergestellt durch Polyaddition von 1,2-Propylenoxid an eine Startermolekülmischung, die bestand aus Sucrose, Glycerin und Wasser | 4,3 | 400 | 5500 |
| Polyol F, hergestellt durch Polyaddition von 1,2-Propylenoxid an Glycerin als Startermolekül | 3,0 | 400 | 365 |
| Polyol G, hergestellt durch Polyaddition von 1,2-Propylenoxid an eine Startermolekülmischung, die bestand aus Sucrose und Triethanolamin. | 4,6 | 500 | 7000 |
| Polyol H, hergestellt durch Polyaddition von 1,2-Propylenoxid an Propylenglykol-1,2 | 2 | 105 | 150 |

A-Komponente: Mischung, die bestand aus

10 Gew.-Teilen Polyol H,
25 Gew.-Teilen Polyol G,

5 Gew.-Teilen Dipropylenglykol,

1,5 Gew.-Teilen eines Silikons als Schaumstabilisator (Polyurax® SR 321 der BP Chemicals),

0,1 Gew.-Teilen Bis(dimethylaminoethyl)ether,

1,0 Gew.-Teilen N,N,N',N'-Tetramethylhexamethylendiamin,

3,3 Gew.-Teilen Wasser,

18 Gew.-Teilen Trichlorfluormethan und

53 Gew.-Teilen eines der Polyole A bis F

B-Komponente:

Mischung aus Diphenylmethan-diisocyanaten und Polyphenyl-polymethylen-polyisocyanaten mit einem NCO-Gehalt von 31 Gew.-% und einer Viskosität von ca. 200 mPa•s bei 23°C.

Die auf 23°C temperierten A-Komponente und B-Komponente wurden bei 23°C 10 Sekunden lang mittels eines hochtourigen Rührers (1200 Upm) intensiv gemischt, die Reaktionsmischung in einen Polystyrolbecher mit einem Volumen von 1,1 Liter eingefüllt und dort aufschäumen gelassen.

An dem so hergestellten Urethangruppen enthaltenden Hartschaumstoff wurden bestimmt:
- die Start- und Abbindezeit,
- die Gesamtdichte nach DIN 53420,
- die Abbindehöhe, d.h. die Höhe des schäumenden Gemisches zum Zeitpunkt des Abbindens relativ zur gesamten Steighöhe des Schaumstoffs, gemessen mit einem Luftschall-Abstands-Meßgerät LAM 80 der Firma Krautkrämer, Großburgwedel und
- die Zunahme der Druckfestigkeit als Funktion der Zeit mit einem Zug-/Druckprüfgerät T 2001 der Firma Lloyd Instruments, Offenbach am Main.

In einer zweiten Versuchsserie wurden die vierfachen Mengen der Komponenten A und B auf die gleiche Weise intensiv gemischt und die Reaktionsmischung in einem Karton mit den Abmessungen 20 x 20 20 cm frei aufschäumen gelassen.

An dem auf diese Weise hergestellten Urethangruppen enthaltenden Hartschaumstoff wurden nach 24 stündiger Lagerung bei Raumtemperatur (23°C) bestimmt die Schaumkerndichte nach DIN 53420 und die Druckfestigkeit nach DIN 53 421.

Die verwendeten Polyole A bis F und eingesetzte Menge der B-Komponente sowie die an den hergestellten Schaumstoffen gemessenen vorgenannten Eigenschaften wurden in Tabelle II zusammengefaßt.

Tabelle II

| | | Beispiel | | | | Vergleichsbeispiel | |
|---|---|---|---|---|---|---|---|
| | | 5 | 6 | 7 | 8 | I | II |
| Polyol [Art] | | A | B | C | D | E | F |
| B-Komponente | [Gew.-Teile] | 154 | 154 | 154 | 154 | 154 | 154 |
| Startzeit | [s] | 17 | 19 | 17 | 18 | 15 | 16 |
| Abbindezeit | [s] | 63 | 68 | 60 | 56 | 60 | 59 |
| Gesamtdichte n. DIN 53420 | [g/l] | 31,8 | 31,1 | 31,1 | 31,9 | 31,7 | 31,3 |
| Abbindehöhe | [%] | 84,7 | 81,8 | 83,6 | 81,8 | 82,3 | 83,2 |
| Druckfestigkeit nach 2,5 min | [N] | 15,8 | 23,1 | 20,1 | 26,7 | 20,9 | 14,7 |
| 3,5 min | [N] | 38,4 | 50,5 | 40,4 | 54 | 48 | 32,4 |
| 4,5 min | [N] | 61,9 | 73,1 | 64,7 | 76,1 | 71 | 48 |
| Druckfestigkeit parallel | [kPa] | 167 | 171 | 145 | 128 | 175 | 118 |
| senkrecht | [kPa] | 69 | 86,4 | 65,6 | 53,6 | 67,6 | 47,3 |
| Schaumkerndichte n. DIN 53420 | [g/l] | 28,6 | 28,2 | 28,3 | 28,5 | 29,5 | 30,2 |

Wie die Tabelle II zeigt, besitzen die nach den Beispielen 5 bis 8 aus den erfindungsgemäß verwendbaren Polyhydroxylverbindungen, die eine niedrigere berechnete Funktionalität und eine beträchtlich niedrigere Viskosität aufweisen, hergestellten PU-Hartschaumstoffe im Vergleich zu dem Schaumstoff nach Vergleichsbeispiel I auf Basis des konventionellen Polyols E ein teilweise besseres Durchhärtungsverhalten, verbunden mit einem verbesserten, für zahlreiche Anwendungsgebiete bedeutungsvollen Entformungsverhalten.

14

Der unter Mitverwendung des niedrigviskosen Polyol F hergestellte Schaumstoff gemäß Vergleichsbeispiel II zeigte neben einem schlechteren Härtungsverhalten nach einigen Tagen Schrumpferscheinungen. Das Polyol F ist daher ungeeignet zum Abmischen mit hochviskosen Polyoxypropylen-polyolen auf der Grundlage von Sucrose-Triethanolamin-Mischungen als Startermoleküle, die üblicherweise zur Herstellung von niedrigdichten, schnellentformbaren PU-Hartschaumstoffen Verwendung finden.

Beispiel 9

A-Komponente:

Mischung, die bestand aus
25 Gew.-Teilen Polyol B,
54 Gew.-Teilen Polyol E,
10 Gew.-Teilen Polyol H,
5 Gew.-Teilen Dipropylenglykol,
1,5 Gew.-Teilen eines Silikons als Schaumstabilisator (Polyurax® SR 321 der BP Chemicals),
0,25 Gew.-Teilen Bis(dimethylaminoethyl)ether,
1,8 Gew.-Teilen N,N,N',N'-Tetramethylhexamethylendiamin,
3,3 Gew.-Teilen Wasser und
20 Gew.-Teilen Trichlorfluormethan.

B-Komponente: analog den Beispielen 5 bis 8.

Die A-Komponente wurde mit 154 Gew.-Teilen der B-Komponente bei 23°C versetzt, 10 Sekunden lang mit Hilfe eines hochtourigen Rührers (1200 Upm) intensiv gemischt, die Reaktionsmischung in einen Polystyrolbecher mit einem Volumen von 1,1 Liter eingefüllt und dort aufschäumen gelassen.

Vergleichsbeispiel III

Man verfuhr analog den Angaben des Beispiels 9, verwendete jedoch in der A-Komponente anstelle des Polyols B das Polyol G und anstelle von 1,8 Gew.-Teilen lediglich 1,5 Gew.-Teile N,N,N',N'-Tetramethylhexamethylendiamin.

An den auf diese Weise hergestellten Urethangruppen enthaltenden Hartschaumstoffen wurden analog den Angaben der Beispiele 5 bis 8 bestimmt:
die Start- und Abbindezeit,
die Gesamtdichte,
die Abbindehöhe und
die Zunahme der Druckfestigkeit als Funktion der Zeit.
Die an den PU-Hartschaumstoffen gemessenen Werte sind in Tabelle III zusammengefaßt.

Tabelle III

| | | Beispiel 9 | Vergleichsbeispiel III |
|---|---|---|---|
| Startzeit [s] | | 12 | 11 |
| Abbindezeit [s] | | 55 | 53 |
| Dichte [s/l] | | 27,1 | 27,1 |
| Abbindehöhe [%] | | 87,4 | 85,9 |
| Druckfestigkeit | | | |
| nach | 2 min [N] | 14,2 | 13,2 |
| | 3 min [N] | 36 | 34,8 |
| | 4 min [N] | 58,3 | 54,2 |
| | 5 min [N] | 71,5 | 67,5 |

Der nach Beispiel 9 hergestellte PU-Hartschaumstoff zeigt nicht nur ein besseres Härtungsverhalten, sondern gleichzeitig auch ein besseres Fließverhalten, charakterisiert durch die Abbindehöhe, als der Schaumstoff nach Vergleichsbeispiel III. Dieses Eigenschaftsbild ist für Anwendungsbereiche bedeutungsvoll, in denen Formwerkzeuge mit schwierig zu befüllenden Raumformen rasch mit schaumfähigen Formulierungen gefüllt werden müssen und die gebildeten Formkörper zur Erzielung kurzer Formstandszeiten umgehend entformt werden.

**Patentansprüche**

1. Verfahren zur Herstellung von Urethan- oder Urethan- und Isocyanuratgruppen gebunden enthaltenden Hartschaumstoffen durch Umsetzung von

a) mindestens einer Polyhydroxylverbindung und

b) gegebenenfalls Kettenverlängerungs- und/oder Vernetzungsmitteln mit einem Molekulargewicht kleiner als 400 mit

c) organischen und/oder modifizierten organischen Polyisocyanaten

in Gegenwart von

d) Treibmitteln,

e) Katalysatoren

sowie gegebenenfalls

f) Hilfsmitteln und/oder Zusatzstoffen

dadurch gekennzeichnet, daß man als Polyhydroxylverbindung (a) verwendet Polyoxypropylen-polyole oder Polyoxyethylen-polyoxypropylen-polyole, die bis zu 30 Gew.-%, bezogen auf das Gewicht der Alkylenoxideinheiten, mittelständig gebundene Oxyethyleneinheiten aufweisen, mit sekundären Hydroxylgruppen,

einer Funktionalität von 3,5 bis 4,3,

einer Hydroxylzahl von 350 bis 650 und

einer Viskosität von 500 bis 2.500 mPa•s bei 23°C,

die hergestellt werden durch anionische Polymerisation von 1,2-Propylenoxid oder Ethylenoxid und 1,2-Propylenoxid an eine Startermolekülmischung, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon.

2. Verfahren nach Anspruch 1, dadurch gekennzeichnet, daß man als Polyhydroxylverbindungen (a) eine Mischung verwendet, die enthält, bezogen auf das Gesamtgewicht von (a),

ai) mindestens 10 Gew.-% eines Polyoxypropylen-polyols oder eines Polyoxyethylen-polyoxypropylen-polyols, das bis zu 30 Gew.-%, bezogen auf das Gewicht der Alkylenoxideinheiten, mittelständig gebundene Oxyethyleneinheiten aufweist, mit sekundären Hydroxylgruppen,

einer Funktionalität von 3,5 bis 4,3,

einer Hydroxylzahl von 350 bis 650 und

einer Viskosität von 500 bis 2500 mPa•s bei 23°C,

die hergestellt werden durch anionische Polymerisation von 1,2-Propylenoxid oder Ethylenoxid und 1,2-Propylenoxid an eine Startermolekülmischung, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon

und

aii) bis zu 90 Gew.-% mindestens eines Polyoxyalkylen-polyols mit einer Funktionalität von 2 bis 8 und einer Hydroxylzahl von 80 bis 850.

3. Mehrstufiges Verfahren zur Herstellung von Urethan- oder Urethan- und Isocyanuratgruppen gebunden enthaltenden Hartschaumstoffen, dadurch gekennzeichnet, daß man

1. in der ersten Reaktionsstufe an eine Startermolekülmischung mit einer Funktionalität von 3,5 bis 4,3, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon,

in Gegenwart mindestens eines basischen Katalysators bei erhöhter Temperatur 1,2-Propylenoxid oder Ethylenoxid und 1,2-Propylenoxid in einer solchen Menge polymerisiert, daß die erhaltenen Polyoxypropylen-polyole oder Polyoxyethylen-polyoxypropylen-polyole mit sekundären Hydroxylgruppen eine Hydroxylzahl von 350 bis 650 und eine Viskosität von 500 bis 2.500 mPa•s bei 23°C besitzen und der Maßgabe, daß die Polyoxyethylen-polyoxypropylen-polyole bis zu 30 Gew.-%, bezogen auf das Gewicht der Alkylenoxideinheiten, mittelständig gebundene Oxyethyleneinheiten aufweisen, und

2. in einer zweiten Reaktionsstufe

a) die erhaltenen Polyoxypropylen-polyole oder Polyoxyethylen-polyoxypropylen-polyole und

b) gegebenenfalls Kettenverlängerungs- und/oder Vernetzungsmittel mit einem Molekulargewicht kleiner als 400 mit

c) organischen und/oder modifizierten organischen Polyisocyanaten

in Gegenwart von

d) Treibmitteln,

e) Katalysatoren

sowie gegebenenfalls

f) Hilfsmitteln und/oder Zusatzstoffen

zur Reaktion bringt.

4. Mehrstufiges Verfahren nach Anspruch 3, dadurch gekennzeichnet, daß die Startermolekülmischung, bezogen auf das Gesamtgewicht, besteht aus

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon.

5. Verfahren nach einem der Ansprüche 1 bis 4, dadurch gekennzeichnet, daß man als organische Polyisocyanate (c) verwendet: Mischungen aus Diphenylmethan-diisocyanaten und Polyphenyl-polymethylen-polyisocyanaten mit einem NCO-Gehalt von 31±2 Gew.-% und als modifizierte organische Polyisocyanate Urethan- und/oder Isocyanuratgruppen enthaltende Polyisocyanatmischungen mit einem NCO-Gehalt von 28 bis 22 Gew.-%, hergestellt durch partielle Urethanisierung und/oder Isocyanuratisierung einer Mischung aus Diphenylmethan-diisocyanaten und Polyphenyl-polymethylen-polyisocyanaten mit einem NCO-Gehalt von 31±2 Gew.-%.

6. Verfahren nach einem der Ansprüche 1 bis 3, dadurch gekennzeichnet, daß man als Treibmittel (d) Wasser verwendet.

7. Neue Polyoxypropylen-polyole oder Polyoxyethylen-polyoxypropylen-polyole, die bis zu 30 Gew.-%, bezogen auf das Gewicht der Alkylenoxideinheiten, mittelständig gebundene Oxyethyleneinheiten aufweisen mit sekundären Hydroxylgruppen,
einer Funktionalität von 3,5 bis 4,3,
einer Hydroxylzahl von 350 bis 650 und
einer Viskosität von 500 bis 2.500 mPa•s bei 23°C,
die hergestellt werden durch anionische Polymerisation von 1,2-Propylenoxid oder Ethylenoxid und 1,2-Propylenoxid bei erhöhter Temperatur an eine Startermolekülmischung, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon.

8. Neue Polyoxypropylen-polyole oder Polyoxyethylen-polyoxypropylen-polyole nach Anspruch 7, dadurch gekennzeichnet, daß die Startermolekülmischung, bezogen auf das Gesamtgewicht, besteht aus

a1) 40 bis 80 Gew.-% Hexantetrole,

a2) 1 bis 30 Gew.-% Hexantriole,

a3) 0 bis 35 Gew.-% Glycerin und

EP 0 458 095 B1

a4) 0 bis 15 Gew.-% Sorbit oder Mannit oder Mischungen davon.

9.  Mischungen aus Polyhydroxylverbindungen zur Herstellung von Polyisocyanat-polyadditionsprodukten, die bestehen aus, bezogen auf das Gesamtgewicht der Polyhydroxylverbindungen (a),

ai) mindestens 10 Gew.-% mindestens eines Polyoxypropylen-polyols oder mindestens eines Polyoxyethylen-polyoxypropylen-polyols, das bis zu 30 Gew.-%, bezogen auf das Gewicht der Alkylenoxideinheiten, mittelständige gebundene Oxyethyleneinheiten aufweist, mit sekundären Hydroxylgruppen,

einer Funktionalität von 3,5 bis 4,3,

einer Hydroxylzahl von 350 bis 650 und

einer Viskosität von 500 bis 2500 mPa•s bei 23°C,

die hergestellt werden durch anionische Polymerisation von 1,2-Propylenoxid oder Ethylenoxid und 1,2-Propylenoxid an eine Startermolekülmischung, die, bezogen auf das Gesamtgewicht, enthält

a1) 40 bis 80 Gew.-% Hexantetrole,

a2) 1 bis 30 Gew.-% Hexantriole,

a3) 0 bis 35 Gew.-% Glycerin und

a4) 0 bis 15 Gew.-% Sorbit oder Mannit oder Mischungen davon

und

aii) bis zu 90 Gew.-% mindestens eines Polyoxyalkylen-polyols mit einer Funktionalität von 2 bis 8 und einer Hydroxylzahl von 80 bis 850.

**Claims**

1.  A process for the preparation of a rigid foam containing bonded urethane groups or containing bonded urethane and isocyanurate groups, by reacting

a) at least one polyhydroxyl compound, and,

b) optionally, a chain extender and/or crosslinking agent having a molecular weight of less than 400 with

c) an organic and/or modified organic polyisocyanate,

in the presence of

d) a blowing agent,

e) a catalyst

and, if desired,

f) assistants and/or additives,

wherein the polyhydroxyl compound (a) used is a polyoxypropylene-polyol or a polyoxyethylene-polyoxypropylene-polyol containing up to 30% by weight, based on the weight of the alkylene oxide units, of oxyethylene units bonded within the chain, containing secondary hydroxyl groups,

having a functionality of from 3.5 to 4.3,

a hydroxyl number of from 350 to 650 and

a viscosity of from 500 to 2,500 mPa•s at 23°C,

and prepared by anionic polymerization of 1,2-propylene oxide or ethylene oxide and 1,2-propylene oxide onto an initiator molecule mixture containing, based on the total weight,

al) from 40 to 80% by weight of a hexanetetrol,

a2) from 1 to 30% by weight of a hexanetriol,

a3) from 0 to 35% by weight of glycerol and

a4) from 0 to 15% by weight of sorbitol or mannitol, or a mixture thereof.

2.  A process as claimed in claim 1 or 2, wherein the polyhydroxyl compound (a) used is a mixture which contains, based on the total weight of (a),

ai) at least 10% by weight of a polyoxypropylene-polyol or a polyoxyethylene-polyoxypropylene-polyol containing up to 30% by weight, based on the weight of the alkylene oxide units, of oxyethylene units bonded within the chain, containing secondary hydroxyl groups,

having a functionality of from 3.5 to 4.3,

a hydroxyl number of from 350 to 650 and

a viscosity of from 500 to 2,500 mPa•s at 23°C,

and prepared by anionic polymerization of 1,2-propylene oxide or ethylene oxide and 1,2-propylene oxide onto an initiator molecule mixture containing, based on the total weight,

a1) from 40 to 80% by weight of a hexanetetrol,

18

a2) from 1 to 30% by weight of a hexanetriol,

a3) from 0 to 35% by weight of glycerol and

a4) from 0 to 15% by weight of sorbitol or mannitol, or a mixture thereof,

and

aii) up to 90% by weight of at least one polyoxyalkylene-polyol having a functionality of from 2 to 8 and a hydroxyl number of from 80 to 850.

3. A multistep process for the preparation of hard foams containing bonded urethane groups or containing bonded urethane and isocyanurate groups, wherein in the first reaction step, 1,2-propylene oxide or ethylene oxide and 1,2-propylene oxide are polymerized onto an initiator molecule mixture having a functionality of from 3.5 to 4.3 and containing, based on the total weight,

a1) from 40 to 80% by weight of a hexanetetrol,

a2) from 1 to 30% by weight of a hexanetriol,

a3) from 0 to 35% by weight of glycerol and

a4) from 0 to 15% by weight of sorbitol or mannitol, or a mixture thereof,

at elevated temperature in the presence of at least one basic catalyst, in such an amount that the resultant polyoxypropylene-polyol or polyoxyethylene-polyoxypropylene-polyol containing secondary hydroxyl groups has a hydroxyl number of from 350 to 650 and a viscosity of from 500 to 2,500 mPa•s at 23°C, and with the proviso that the polyoxyethylene-polyoxypropylene-polyol contains up to 30% by weight, based on the weight of the alkylene oxide units, of oxyethylene units bonded within the chain, and in a second reaction step,

a) the resultant polyoxypropylene-polyol or polyoxyethylene-polyoxypropylene-polyol and,

b) if desired, a chain extender and/or crosslinking agent having a molecular weight of less than 400 are reacted with

c) an organic and/or modified organic polyisocyanate,

in the presence of

d) a blowing agent,

e) a catalyst

and, if desired,

f) assistants and/or additives.

4. The multistep process as claimed in claim 4, wherein the initiator molecule mixture comprises, based on the total weight,

a1) from 40 to 80% by weight of a hexanetetrol,

a2) from 1 to 30% by weight of a hexanetriol,

a3) from 0 to 35% by weight of glycerol and

a4) from 0 to 15% by weight of sorbitol or mannitol, or a mixture thereof.

5. A process as claimed in any of claims 1 to 4, wherein the organic polyisocyanate (c) used is a mixture of diphenylmethane diisocyanates and polyphenyl-polymethylene polyisocyanates containing 31±2% by weight of NCO, and the modified organic polyisocyanate used is a polyisocyanate mixture containing urethane groups and/or isocyanurate groups, containing from 28 to 22% by weight of NCO and prepared by partially urethanizing and/or isocyanuratizing a mixture of diphenylmethane diisocyanates and polyphenyl-polymethylene polyisocyanates containing 31±2% by weight of NCO.

6. A process as claimed in any of claims 1 to 4, wherein the blowing agent (d) used is water.

7. A novel polyoxypropylene-polyol or a polyoxyethylene-polyoxypropylene-polyol containing up to 30% by weight, based on the weight of the alkylene oxide units, of oxyethylene units bonded within the chain, containing secondary hydroxyl groups,

having a functionality of from 3.5 to 4.3,

a hydroxyl number of from 350 to 650 and

a viscosity of from 500 to 2,500 mPa•s at 23°C,

and prepared by anionic polymerization of 1,2-propylene oxide or ethylene oxide and 1,2-propylene oxide at elevated temperature onto an initiator molecule mixture containing, based on the total weight,

a1) from 40 to 80% by weight of a hexanetetrol,

a2) from 1 to 30% by weight of a hexanetriol,

a3) from 0 to 35% by weight of a glycerol and

a4) from 0 to 15% by weight of sorbitol or mannitol, or a mixture thereof.

8. A novel polyoxypropylene-polyol or polyoxyethylene-polyoxypropylene-polyol as claimed in claim 7, wherein the initiator molecule mixture comprises, based on the total weight,
    a1) from 40 to 80% by weight of a hexanetetrol,
    a2) from 1 to 30% by weight of a hexanetriol,
    a3) from 0 to 35% by weight of glycerol and
    a4) from 0 to 15% by weight of sorbitol or mannitol, or a mixture thereof.

9. A mixture of polyhydroxyl compounds for preparing polyisocyanate polyaddition products, which comprises, based on the total weight of the polyhydroxyl compounds (a),
    ai) at least 10% by weight of at least one polyoxypropylene-polyol or at least one polyoxyethylene-polyoxypropylene-polyol containing up to 30% by weight, based on the weight of the alkylene oxide units, of oxyethylene units bonded within the chain, containing secondary hydroxyl groups,
    having a functionality of from 3.5 to 4.3,
    a hydroxyl number of from 350 to 650 and
    a viscosity of from 500 to 2,500 mPa•s at 23°C,
    and prepared by anionic polymerization of 1,2-propylene oxide or ethylene oxide and 1,2-propylene oxide onto an initiator molecule mixture containing, based on the total weight,
       a1) from 40 to 80% by weight of a hexanetetrol,
       a2) from 1 to 30% by weight of a hexanetriol,
       a3) from 0 to 35% by weight of glycerol and
       a4) from 0 to 15% by weight of sorbitol or mannitol, or a mixture thereof,
    and
       aii) up to 90% by weight of at least one polyoxyalkylene-polyol having a functionality of from 2 to 8 and a hydroxyl number of from 80 to 850.

## Revendications

1. Procédé de préparation de matières alvéolaires dures contenant, liés, des groupes uréthanne ou uréthanne et isocyanurate, par réaction de :
    a) au moins un composé polyhydroxylé et
    b) éventuellement des agents de prolongement de chaînes et/ou de réticulation, d'un poids moléculaire inférieur à 400 avec
    c) des polyisocyanates organiques et/ou organiques modifiés en présence de
    d) gonflants
    e) catalyseurs
    ainsi que, éventuellement
    f) des auxiliaires et/ou additifs,
    caractérisé par le fait que l'on utilise, comme composé polyhydroxylé (a) des polyoxypropylène-polyols ou polyoxyéthylène-polyoxy-propylène-polyols, qui possèdent jusqu'à 30 % en poids, rapportés au poids des motifs alkylèneoxyde, des motifs oxyéthylène liés centralement, à groupes hydroxyle secondaires,
    une fonctionnalité de 3,5 à 4,3,
    un indice d'hydroxyle de 350 à 650 et
    une viscosité de 500 à 2500 mPa.s à 23°C, qui sont préparés par polymérisation anionique de 1,2-propylèneoxyde ou éthylénoxyde et 1,2-propylènoxyde sur un mélange moléculaire de démarrage, qui contient, rapportés au poids total,
       a1) 40 à 80 % en poids d'hexantétroles,
       a2) 1 à 30 % en poids d'hexantrioles,
       a3) 0 à 35 % en poids de glycérol et
       a4) 0 à 15 % en poids de sorbite ou mannite ou mélanges de ceux-ci.

2. Procédé selon la revendication 1 ou 2, caractérisé par le fait que l'on utilise comme composés polyhydroxylés (a) un mélange qui contient, rapportés au poids total de (a)
    ai) au moins 10 % en poids d'un polyoxypropylène-polyol ou d'un polyoxyéthylène-polyoxypropylène-polyol qui possède jusqu'à 30 % en poids, rapportés au poids des motifs alkylèneoxyde, des motifs oxyéthylène liés centralement, à groupes hydroxyle secondaires,

une fonctionnalité de 3,5 à 4,3,

un indice d'hydroxyle de 350 à 650 et

une viscosité de 500 à 2500 mPa.s à 23°C, qui sont préparés par polymérisation anionique de 1,2-propylèneoxyde ou éthylénoxyde et 1,2-propylènoxyde sur un mélange moléculaire de démarrage, qui contient, rapportés au poids total

a1) 40 à 80 % en poids d'hexantétroles,

a2) 1 à 30 % en poids d'hexantrioles,

a3) 0 à 35 % en poids de glycérol et

a4) 0 à 15 % en poids de sorbite ou mannite ou mélanges de ceux-ci et

aii) jusqu'à 90 % en poids d'au moins un polyoxylalkylène-polyol d'une fonctionnalité de 2 à 8 et un indice d'hydroxyle de 80 à 850.

3. Procédé en plusieurs phases de préparation de matière alvéolaires dures contenant, liés, des groupes uréthanne ou uréthanne et isocyanurate, caractérisé par le fait que

1. dans la première phase, sur un mélange moléculaire de démarrage, d'une fonctionnalité de 3,5 à 4,3, qui contient, rapportés au poids total

a1) 40 à 80 % en poids d'hexantétrole,

a2) 1 à 30 % en poids d'hexantriole,

a3) 0 à 35 % en poids de glycérol et

a4) 0 à 45 % en poids de sorbite ou mannite ou mélanges des deux

on polymérise, en présence d'au moins un catalyseur basique, à température élevée, du 1,2-propylènoxyde ou éthylènoxyde et 1,2-propylènoxyde, en une quantité telle que les polyoxypropylènpolyols ou polyoxyéthylène-polyoxypropylène-polyols obtenus, à groupes hydroxyle secondaires, présentant un indice d'hydroxyle de 350 à 350 et une viscosité de 500 à 250 mPa.s, à 23°C et la condition que les polyoxyéthylèn-polyoxypropylèn-polyols présentent, jusqu'à 30 % en poids, rapportés au poids des motifs alkylènoxydes, des motifs oxyéthylène liés centralement, et

2. dans une deuxième phase on met en réaction

a) les polyoxypropylèn-polyols ou polyoxyéthylèn-polyoxypropylène-polyols obtenus et

b) éventuellement des agents de prolongement de chaînes et/ou de réticulation, d'un poids moléculaire inférieur à 400 avec

c) des polyisocyanates organiques et/ou organiques modifiés en présence de

d) gonflants

e) catalyseurs

ainsi que, éventuellement

f) des auxiliaires et/ou additifs.

4. Procédé en plusieurs phases selon la revendication 3, caractérisé par le fait que le mélange moléculaire de démarrage, est constitué, rapporté au poids total, de

a1) 40 à 80 % en poids d'hexantétrole,

a2) 1 à 30 % en poids d'hexantriole,

a3) 0 à 35 % en poids de glycérol et

a4) 0 à 45 % en poids de sorbite ou mannite ou mélanges des deux.

5. Procédé selon une des revendications 1 à 4, caractérisé par le fait que l'on utilise comme polyisocyanate organique (c), des mélanges de diphénylméthan-diisocyanates et polyphényl-polyméthylènpolyisocyanates d'une teneur en NCO de 31±2 % en poids et, comme polyisocyantes organiques modifiés, des mélanges de polyisocyanate contenant des groupes uréthan et/ou isocyanurate, d'une teneur en NCO de 28 à 22 % en poids, préparés par uréthanisation et/ou isocyanurisation partielle d'un mélange de diphénylméthan-diisocyanates et polyphénylpolyméthylèn-polyiso-cyanates d'une teneur en NCO de 31±2 % en poids.

6. Procédé selon l'une des revendications 1 à 4, caractérisé par le fait que l'on utilise l'eau comme gonflant (d).

7. Nouveaux polyoxypropylèn-polyols ou polyoxyéthylèn-polyoxypropylèn-polyols qui possèdent jusqu'à 30 % en poids, rapportés au poids des motifs alkylèneoxyde, des motifs oxyéthylène liés centralement, à groupes hydroxyle secondaires,

une fonctionnalité de 3,5 à 4,3,

un indice d'hydroxyle de 350 à 650 et

une viscosité de 500 à 2500 mPa.s à 23°C, qui sont préparés par polymérisation anionique de 1,2-propylèneoxyde ou éthylénoxyde et 1,2-propylènoxyde sur un mélange moléculaire de démarrage, qui contient, rapportés au poids total

    a1) 40 à 80 % en poids d'hexantétroles,

    a2) 1 à 30 % en poids d'hexantrioles,

    a3) 0 à 35 % en poids de glycérol et

    a4) 0 à 15 % en poids de sorbite ou mannite ou mélanges de ceux-ci.

8.    Nouveaux polyoxypropylèn-polyols ou polyoxyéthylèn-polyoxypropylèn-polyols selon la revendication 7, caractérisé par le fait que le mélange moléculaire de démarrage est constitué, rapportés au poids total, de

    a1) 40 à 80 % en poids d'hexantétrole,

    a2) 1 à 30 % en poids d'hexantriole,

    a3) 0 à 35 % en poids de glycérol et

    a4) 0 à 45 % en poids de sorbite ou mannite ou mélanges des deux.

9.    Mélanges de composés polyhydroxylés pour la préparation de produits de polyaddition de polyisocyanate qui sont constitués, rapportés au poids total des composés polyhydroxylés (a)

    ai) au moins 10 % en poids d'un polyoxypropylène-polyol ou d'un polyoxyéthylène-polyoxypropylène-polyol qui possède jusqu'à 30 % en poids, rapportés au poids des motifs alkylèneoxyde, des motifs oxyéthylène liés centralement, à groupes hydroxyle secondaires,

    une fonctionnalité de 3,5 à 4,3,

    un indice d'hydroxyle de 350 à 650 et

    une viscosité de 500 à 2500 mPa.s à 23°C qui sont préparés par polymérisation anionique de 1,2-propylèneoxyde ou éthylénoxyde et 1,2-propylènoxyde sur un mélange moléculaire de démarrage, qui contient, rapportés au poids total

        a1) 40 à 80 % en poids d'hexantétroles,

        a2) 1 à 30 % en poids d'hexantrioles,

        a3) 0 à 35 % en poids de glycérol et

        a4) 0 à 15 % en poids de sorbite ou mannite ou mélanges de ceux-ci et

    aii) jusqu'à 90 % en poids d'au moins un polyoxylalkylène-polyol d'une fonctionnalité de 2 à 8 et un indice d'hydroxyle de 80 à 850.